# EUROPEAN PATENT APPLICATION

(11) **EP 3 242 116 A1**
(43) Date of publication of application: **08.11.2017**
(21) Application number: 17169657.8
(22) Date of filing: 05.05.2017
(51) Int. Cl.: G01K 7/42, G06Q 10/08

(54) **VEHICLE LOAD TEMPERATURE MONITORING SYSTEM**

(30) Priority: 05.05.2016 US 201662332384 P
(71) Applicant: Minds Inc., Boisbrand, Québec J7H 1N8 (CA)
(72) Inventor: Vidaillac, Pierre, Kelowna, British Columbia V1X 7V5 (CA)
(74) Representative: Gulde & Partner

(57) **Abstract**

A system and method for predicting the final temperature of a pre-heated load transported from a first location to a second location by one of a plurality of transport vehicles is disclosed. The system comprises a database containing a plurality of models for use in predicting a temperature of the load within one of a plurality of trucks at a destination, each of the models corresponding to a particular truck, an interface adapted to receive at least one factor affecting a change in temperature of the load and a processor operable to calculate the predicted terminal temperature of the load. The method comprises retrieving a particular model from the database receiving at least one factor and utilizing the processor, calculating the predicted terminal temperature of the load. The method may further comprise, modifying the model for that particular truck and updating the database for that particular truck.

## Description

### CROSS REFERENCE TO RELATED APPLICATION

This application claims priority to U.S. Provisional Patent Application No. 62/332,384, filed May 5, 2016 entitled Vehicle Load Temperature Monitoring System.

### BACKGROUND OF THE INVENTION

### 1. Field of Invention

The present invention relates generally to construction and in particular to a method and system for measuring and estimating the temperature of a vehicle load.

### 2. Description of Related Art

In road construction, asphalt is commonly transported from a production plant to a road construction site where it is laid and compacted to form the road surface. Asphalt utilized for such construction commonly leaves such production plant at a temperature of between **130** and **160** degrees Celsius and is commonly desired to be applied to the road surface and compacted at a temperature between **110** and **150** degrees Celsius.

The importance of the temperature of the asphalt received at and applied to the road surface is well known. In particular, the temperature range of the applied asphalt as set out above is commonly desired to be between **110** and **150** degrees Celsius. If the temperature of the applied asphalt is too low, the proper density will not be achieved during compaction whereas if the temperature of the applied asphalt is too high, it may be too soft permitting the compaction equipment to sink in. In addition, it is known that if the temperature between different loads are too different, then weaknesses may occur along the boundary between these loads on the finished surface. As these boundaries commonly extend transversely across the roadway, they may result in cracks extending across the road surface. Conventionally, it has been found that a temperature between different loads transported to the construction site should be maintained within **15** degrees Celsius of each other to reduce this risk.

It will be appreciated that during transportation from the production plant to the construction site, the temperature of the asphalt will drop due to a variety of factors. Such factors may include the current ambient conditions, the geometric configuration of the dump truck hauling the asphalt as well as the time of the trip from the plant to the construction site. What is desirable is a manner of knowing the temperature of the asphalt load within each truck to ensure that the applied material is within the desired temperature range.

### SUMMARY OF THE INVENTION

According to a first embodiment of the present invention, there is disclosed a method for predicting the final temperature of a pre-heated load transported from a first location to a second location by one of a plurality of transport vehicles. The method comprises providing a database containing a plurality of models for predicting a temperature of the load within one of a plurality of trucks at a destination and retrieving from the database a particular model corresponding to a particular truck. The method further comprises receiving at least one factor affecting a change in temperature of the load and utilizing a processor, calculating the predicted terminal temperature of the load.

The at least one factor may be selected from a list consisting of ambient temperature, ambient humidity, ambient brightness, regional meteorological forecast, covered or uncovered load, location and speed of the particular truck. The database may include a unique model for each particular truck. Each unique model may include a unique constant for each factor to be used in calculating the predicted terminal temperature.

The method may further comprise, utilizing the processor, comparing the predicted terminal temperature to a measured terminal temperature of the load, modifying the model for that particular truck to match the measured and predicted terminal temperatures and updating the database for that particular truck in the database with the modified model.

The measured temperature may be measured at a paving machine at the worksite. The measured temperature may be transmitted to the processor through a network. Updating may comprise updating at least one of a plurality of unique constants, each corresponding to one of the factors for the particular vehicle to be used in calculating the predicted terminal temperature.

According to a further embodiment of the present invention, there is disclosed a system for predicting the final temperature of a pre-heated load transported from a first location to a second location by one of a plurality of transport vehicles. The system comprises a database containing a plurality of models for use in predicting a temperature of the load within one of a plurality of trucks at a destination, each of the models corresponding to a particular truck, an interface adapted to receive at least one factor affecting a change in temperature of the load and a processor operable to receive the at least one factor and being further adapted to calculate the predicted terminal temperature of the load.

The at least one factor may be selected from the list consisting of ambient temperature, ambient humidity, ambient brightness, regional meteorological forecast and covered or uncovered load. The database may include a unique model for each particular truck. Each unique model may include a unique constant for each factor to be used in calculating the predicted terminal temperature.

The processor may be adapted to compare the predicted terminal temperature to a measured terminal temperature of the load, modify the model for that particular truck to match the measured and predicted terminal temperatures and update the database for that particular truck in the database with the modified model.

The measured temperature may be measured at a paving machine at the worksite. The system may further comprise a network for transmitting the measured temperature to the processor. The processor may be adapted to update at least one of a plurality of unique constants, each corresponding to one of the factors for the particular vehicle to be used in calculating the predicted terminal temperature.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention wherein similar characters of reference denote corresponding parts in each view,
- Figure **1**: is an illustration of a system for tracking and predicting the temperature of a load in a dump truck according to a first embodiment of the present invention.
- Figure **2**: is a schematic of the system of Figure **1**.
- Figure **3**: is an illustration of a data table for use in the system of Figure **1**.
- Figure **4**: is a flow chart of a method for predicting end temperature of a load utilizing the system of Figure **1**.
- Figure **5**: is a flow chart of a method for updating the database for use with the system of Figure **1**.

### DETAILED DESCRIPTION

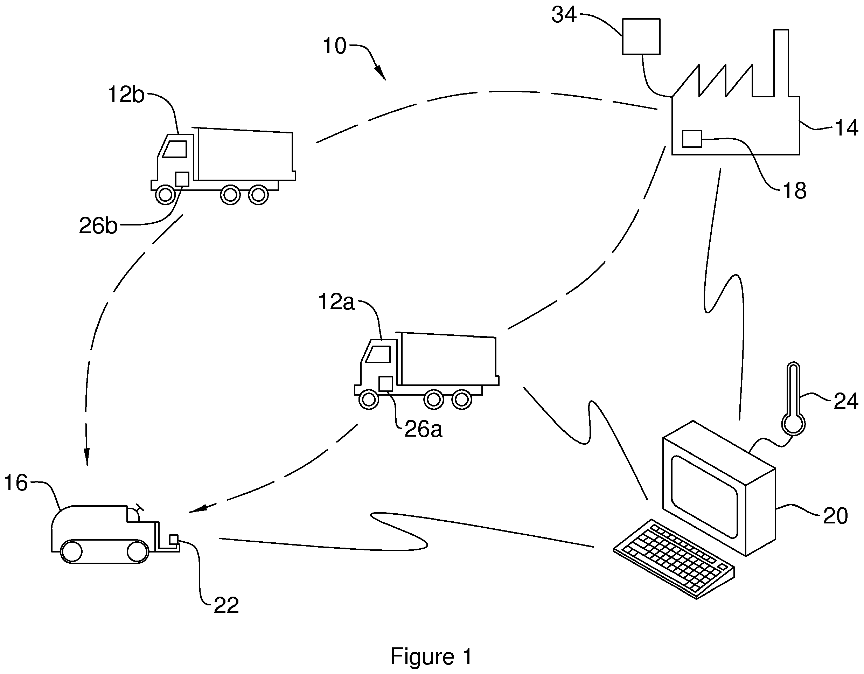

Referring to Figure **1**, a system for measuring and predicting the temperature of a load within one of a plurality of trucks **12**a and **12**b according to a first embodiment of the invention is shown generally at **10**. As illustrated in Figure **1**, the system may be useful for measuring and predicting the temperature change within the load as it is transported between a first location, such as a production plant **14** to a worksite, such as, by way of non-limiting example, a paving machine **16**. The temperature of the load as it leaves the plant **14** may be provided by the plant or may be measured by an initial temperature sensor **18**. It should be noted that the load temperature throughout the truck is very homogeneous at this stage. It will be appreciated that a plurality of trucks **12**a and **12**b may be utilized for such task and that each truck may have different characteristics.

The system **10** comprises a system server or processor **20**, at least one terminal temperature sensor **22** adapted to measure the temperature of the asphalt at the worksite **16** and at least one environmental sensor **24** adapted to measure the ambient conditions. It will also be appreciated that the environmental conditions may be inputted by a user or looked up or otherwise retrieved by the system from any source, such as online sources or local weather offices. As utilized herein, all references to the use of an environmental sensor will be understood as including such sources. The system **10** may also include ID tags or transmitters **26** adapted to transmit information on the identity and condition of each vehicle, particularly location and speed. As illustrated in Figure **1**, the system may comprise a plurality of trucks **12**a and **12**b, respectively each having a unique ID tag **26**a and **26**b respectively. The processor **20** receives terminal temperature, ambient conditions and identity and condition of the vehicle to compare to predicted values from formulas or tables stored within a database associated with the processor **20**. The processor **20** may then update the formula or tables as will be more fully described below for that vehicle.

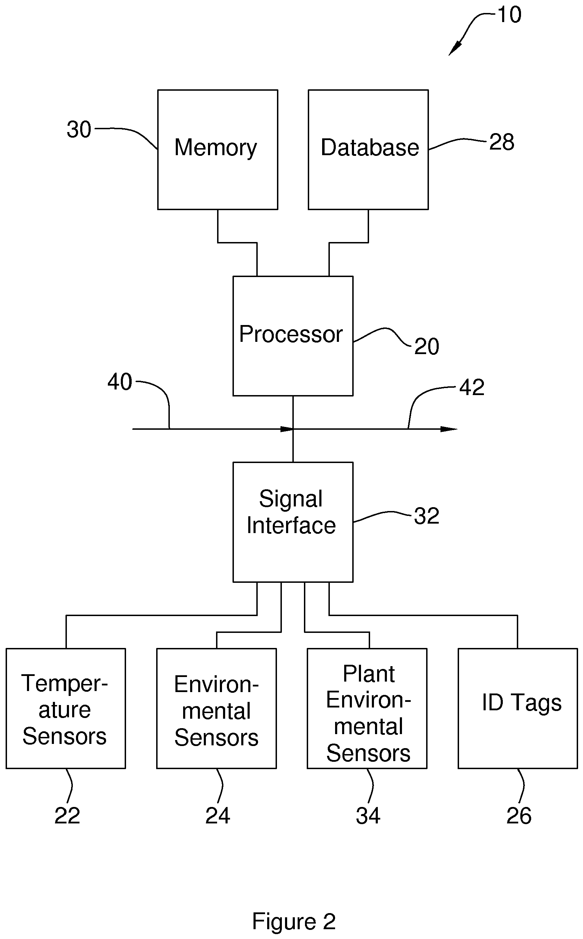

Turning now to Figure **2**, the system **10** comprises a processor **20** having an optional memory **30** operable to interface with any one or more of the terminal temperature sensors **22**, environmental sensors **24** or source and ID tags **26**. The processor **20** also includes an associated database **28** operable to store information providing a formula or table for predicting the terminal temperature of the load for each truck given a set of factors as measured by the environmental sensors **24** and ID tags **26**. The system may also include a plant environmental sensor **34** adapted to measure ambient conditions as the plant **14**. As set out above, it will be appreciated that the environmental conditions may be inputted by a user or looked up or otherwise retrieved by the system from any source, such as online sources or local weather offices

In the present embodiment, the processor circuit includes a microprocessor or other suitable processor circuit as are generally known in the art. More generally, in this specification, including the claims, the term "processor circuit" is intended to broadly encompass any type of device or combination of devices capable of performing the functions described herein, including (without limitation) other types of microprocessors, microcontrollers, other integrated circuits, other types of circuits or combinations of circuits, logic gates or gate arrays, or programmable devices of any sort, for example, either alone or in combination with other such devices located at the same location or remotely from each other, for example. Additional types of processor circuits will be apparent to those ordinarily skilled in the art upon review of this specification, and substitution of any such other types of processor circuits is considered not to depart from the scope of the present invention as defined by the claims appended hereto. In various embodiments, the processor **20** can be implemented as a single-chip, multiple chips and/or other electrical components including one or more integrated circuits and printed circuit boards.

The processor **20** together with a suitable operating system may operate to execute instructions in the form of computer code and produce and use data. By way of example and not by way of limitation, the operating system may be Windows-based, Mac-based, or Unix or Linux-based, among other suitable operating systems. Operating systems are generally well known and will not be described in further detail here.

Memory **30** encompasses one or more storage mediums and generally provides a place to store computer code (e.g., software and/or firmware) and data that are used by the processor **20**. It may comprise, for example, electronic, optical, magnetic, or any other storage or transmission device capable of providing the processor **20** with program instructions. Memory **30** may further include a floppy disk, CD-ROM, DVD, magnetic disk, memory chip, ASIC, FPGA, EEPROM, EPROM, flash memory, optical media, or any other suitable memory from which processor **30** can read instructions in computer programming languages. Memory **30** may include various other tangible, non-transitory computer-readable media including Read-Only Memory (ROM) and/or Random-Access Memory (RAM). As is well known in the art, ROM acts to transfer data and instructions uni-directionally to the processor **20**, and RAM is used typically to transfer data and instructions in a bi-directional manner. In the various embodiments disclosed herein, RAM includes computer program instructions that when executed by the processor **20** cause the processor **20** to execute the program instructions described in greater detail below.

The memory **30** may store for use by the processor **20**, computer instructions as a program for executing the various embodiments of the disclosure to carry out the methods of the embodiments disclosed herein. In a preferred embodiment, a native application (e.g. computer program product) is installed on the device, wherein it is either pre-installed on the device or it is downloaded from the Internet (e.g. via email and activated with a code generated by the system server or installed via a web platform). It may be written in a language to run on a variety of different types of devices; or it may be written in a device-specific computer programming language for a specific type of device.

The processor **20** is generally coupled to a variety of interfaces such as graphics interface control and user input interface such as a keyboard, mouse or the like as are commonly known. The processor **20** may also coupled to a signal interface **32** that allows the processor to be coupled to another computer or telecommunications network (e.g., internet) or to receive the signals from the terminal temperature sensors **22**, environmental sensors **24**, plant environmental sensor **34** and ID tags **26**. More particularly, the network interface generally allows processor **20** to receive information from and to output information to the network in the course of performing various method steps described in the embodiments herein. The signal interface may comprise radio wave transmission components dedicated to cellular telephone functions, RF transmission functions, internet transmissions or the like as are commonly known.

The terminal temperature sensor **22** may comprise a sensor adapted to measure the temperature of the load at the worksite **16**. In particular, the terminal temperature sensor may be located on a hopper bin of a paving machine to measure the temperature of the load as it is deposited therein. Optionally, the terminal temperature sensor **22** may be located on each truck to measure the temperature of the locate therein or held by an operator to measure the temperature of the load as desired. By way of non-limiting example the terminal temperature sensor **22** may comprise an optical infrared temperature sensor or may optionally be a thermocouple applied to a surface of the truck or paving machine to measure the temperature of the load as the material moves therepast.

The environmental sensor **24** adapted to measure the environmental conditions, such as by way of non-limiting example, ambient temperature, humidity, brightness (to determine if the environment is sunny or cloudy or variation thereof) or precipitation to measure if the weather is raining. As illustrated in Figure **1**, the environmental sensor may be located proximate to the processor **20** or may optionally be located proximate to the production plant **14** or the worksite **16**. Optionally, the measure of environmental conditions may be provided to the processor **20** from an external source such as inputted by a user or looked up from a weather office or the internet. It will be appreciated that any other weather measuring systems, such as, by way of non-limiting example, mini weather stations may also be provided.

The ID tags **26** are located on each truck and identify each unique truck for tracking. The ID tags may comprise radio frequency identification (RFID) tags, by way of non-limiting example and may be adapted to transmit additional information about the vehicle to the processor **20**. By way of non-limiting example, the ID Tags **26** may optionally include moisture and/or temperature sensors to transmit information to the processor about the ambient conditions at that truck during the trip from the production plant **14** to the worksite **16**. Optionally, the moisture and/or temperature sensors may be separate from the ID tags and interfaced therewith. Additionally, the ID tags may be adapted to measure trip details of the truck, such as, by way of non-limiting example, the speed, location, distance travelled and/or time of journey of the truck from the production plant **14** to the worksite **16**.

As illustrated in Figure **2**, the processor receives the identification of a truck as it is in transit from the production plant **14** to the worksite **16**. Thereafter, the processor **20** looks up the chart or formula corresponding to that truck from the database and receives the information relating to trip details of the truck from the ID tag **26** and environmental conditions from the environmental sensor **24**. From these details the processor is able to predict a terminal temperature for the load within that truck **12** from an initial temperature **40** of the load at the production plant **14** as supplied by the production plant or the sensor **18**. Such information may be useful in selecting the order in which trucks are to be utilized at the worksite **16** to optimize the consistency of the temperature of the asphalt applied. Additionally, as described further below, the processor **20** may then also receive the actual temperature of the load as measured by the terminal temperature senor **22** to update the formula or chart for that truck **12**a or **12**b.

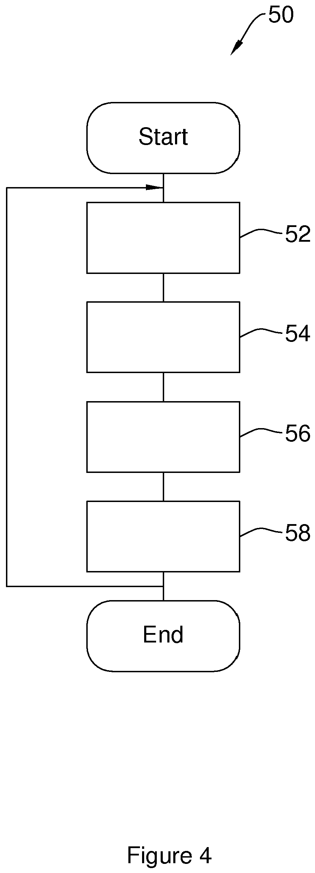

Turning now to Figure **4**, a method for measuring and comparing the final temperature of the delivered load is illustrated at **50**. In particular, at an initial step, the processor retrieves a starting temperature for the load at step **52**. The initial temperature may be inputted by a user or may 'optionally be measured at the production plant **14**. Thereafter the processor reads the ID tag of the truck **12** that has left the production plant **14** and retrieves from the database **28** the formula or table utilized to predict the destination temperature of that truck in step **54**. The processor **20** then utilizes the formula or table to predict the terminal temperature of the load in step **56** and transmits the predicted temperature to a user, such as, by way of non-limiting example, an operator of the paving machine. The user may then utilize this predicted temperature to select which one from a plurality of trucks they wish to utilize next.

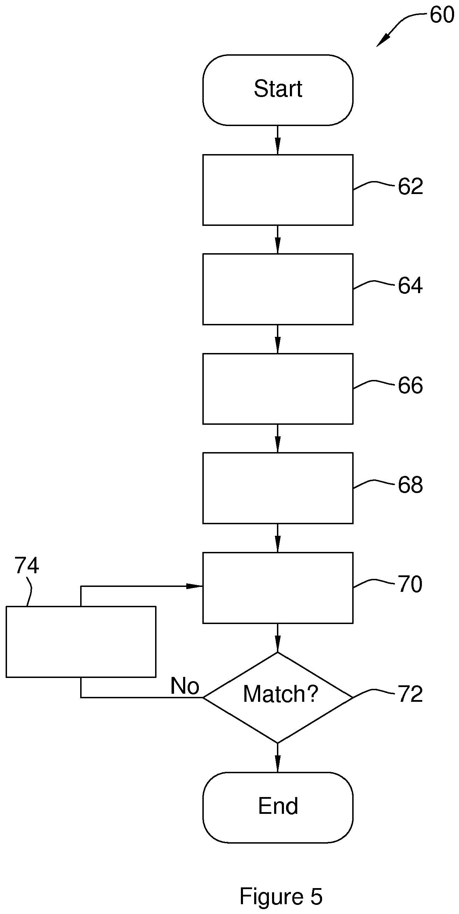

Turning now to Figure **5**, a method for adjusting the formula or table is illustrated at **60**. Similar to the measuring and predicting method illustrated in Figure **4**, the processor initially receives the starting temperature for the load and looks up the identification of the truck in steps **62** and **64**. Thereafter, the processor utilizes the table or formula for the truck to calculate a predicted terminal temperature in step **66**. Once the load has been deposited into the paving machine **16**, the processor receives the environmental conditions in step **68** from the environmental senor **24** in step **68** and the terminal temperature from the terminal temperature sensor **22** in step **70**. Thereafter, the processor **20** compares the measured terminal temperature to the predicted terminal temperature in step **72**. If the values are the same, the formula or table is not updated. If the values are not the same, the processor **20** updates the constants in the formula or table in step **74** and compares the two values again until they match within a predetermined range. It should be noted that the truck temperature evolves differently inside the bed of the truck. Surface temperature cools very fast, side and bottom temperatures cool slower and core temperature can stay warm for many hours. The system is able to calculate each of these temperatures separately.

It will be appreciated that the models for each truck may be updated in any known method. By way of non-limiting example, a plurality of tables may be provided for each truck and in each combination of conditions wherein the system will select the appropriate table for that truck and conditions to predict or determine the expected final temperature. After measuring the actual terminal temperature for that truck and condition, the system may modify the values of that table according to known methods, such as averaging or substitution. Optionally, the database may include a formula for determining the final temperature. The system may then compare the predicted to measured terminal temperature and thereafter modify or adjust the constants. It will also be appreciated that the system may include a fault detection limit wherein the measured terminal temperature is too far away from the predicted range, that a fault in one or more stages of the system is predicted whereupon a notice may be provided to a user and the measured temperature ignored for that set of conditions.

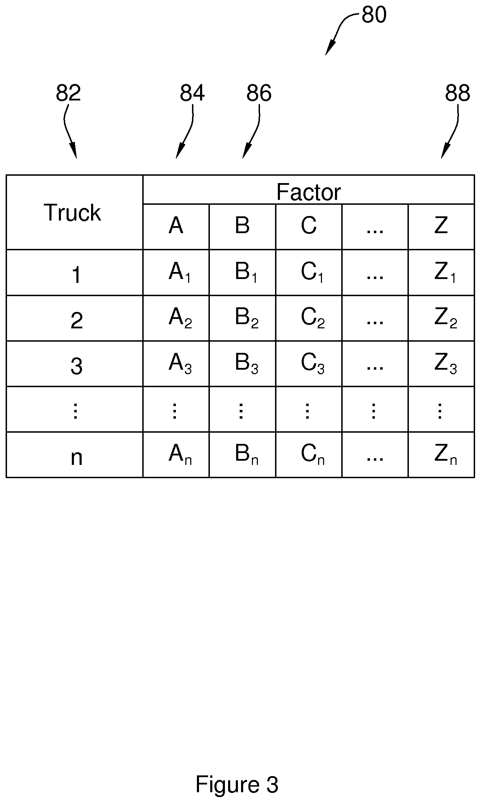

An exemplary illustration of the data **80** contained within the database is illustrated in Figure **3**. In particular, the database may contain information relating to a plurality of trucks **82** each having constants for each of the possible conditions which may affect the final temperature of the load in columns **84**, **86** and **88**. It will be appreciated that quantity of constants tracked may vary depending on the complexity of the jobsite as well as the information available.

While specific embodiments of the invention have been described and illustrated, such embodiments should be considered illustrative of the invention only and not as limiting the invention as construed in accordance with the accompanying claims.

## Claims

1. A method for predicting the final temperature of a pre-heated load transported from a first location to a second location by one of a plurality of transport vehicles, the method comprising:
providing a database containing a plurality of models for predicting a temperature of said load within one of a plurality of trucks at a destination;
retrieving from said database a particular model corresponding to a particular truck;
receiving at least one factor affecting a change in temperature of said load; and
utilizing a processor, calculating said predicted terminal temperature of said load.

2. The method of claim 1 wherein said at least one factor is selected from a list consisting of ambient temperature, ambient humidity, ambient brightness, regional meteorological forecast, covered or uncovered load, location and speed of said particular truck.

3. The method of claim 1 wherein said database includes a unique model for each particular truck.

4. The method of claim 3 wherein each unique model includes a unique constant for each factor to be used in calculating said predicted terminal temperature.

5. The method of claim 1 further comprising, utilizing said processor:
comparing said predicted terminal temperature to a measured terminal temperature of said load;
modifying said model for that particular truck to match said measured and predicted terminal temperatures; and
updating said database for that particular truck in said database with said modified model.

6. The method of claim 5 wherein said measured temperature is measured at a paving machine at said worksite.

7. The method of claim 6 wherein measured temperature is transmitted to said processor through a network.

8. The method of claim 5 wherein updating comprises updating at least one of a plurality of unique constants, each corresponding to one of said factors for said particular vehicle to be used in calculating said predicted terminal temperature.

9. A system for predicting the final temperature of a pre-heated load transported from a first location to a second location by one of a plurality of transport vehicles, the system comprising:
a database containing a plurality of models for use in predicting a temperature of said load within one of a plurality of trucks at a destination, each of said models corresponding to a particular truck;
an interface adapted to receive at least one factor affecting a change in temperature of said load; and
a processor operable to receive said at least one factor and being further adapted to calculate said predicted terminal temperature of said load.

10. The system of claim 9 wherein said at least one factor is selected from said list consisting of ambient temperature, ambient humidity, ambient brightness, regional meteorological forecast and covered or uncovered load.

11. The system of claim 9 wherein said database includes a unique model for each particular truck.

12. The system of claim 11 wherein each unique model includes a unique constant for each factor to be used in calculating said predicted terminal temperature.

13. The system of claim 9 wherein said processor is adapted to:
compare said predicted terminal temperature to a measured terminal temperature of said load;
modify said model for that particular truck to match said measured and predicted terminal temperatures; and
update said database for that particular truck in said database with said modified model.

14. The system of claim 13 wherein said measured temperature is measured at a paving machine at said worksite.

15. The system of claim 14 further comprising a network for transmitting said measured temperature to said processor.

16. The system of claim 13 wherein said processor is adapted to update at least one of a plurality of unique constants, each corresponding to one of said factors for said particular vehicle to be used in calculating said predicted terminal temperature.
